(19) Europäisches Patentamt
European Patent Office
Office européen des brevets

(11) **EP 3 498 569 B1**

(12) **EUROPEAN PATENT SPECIFICATION**

(45) Date of publication and mention
of the grant of the patent:
**11.12.2024 Bulletin 2024/50**

(21) Application number: **17839678.4**

(22) Date of filing: **17.07.2017**

(51) International Patent Classification (IPC):
**B61L 27/20** (2022.01)   **B61L 27/00** (2022.01)
**B61L 25/02** (2006.01)   **B61L 23/04** (2006.01)
**G01H 17/00** (2006.01)   **B61L 1/02** (2006.01)

(52) Cooperative Patent Classification (CPC):
**B61L 1/02; B61L 23/041; B61L 25/02;**
**B61L 25/026; B61L 27/00; G01H 17/00;**
B61L 2027/202

(86) International application number:
**PCT/KR2017/007662**

(87) International publication number:
**WO 2018/030660 (15.02.2018 Gazette 2018/07)**

(54) **TRAIN CONTROL SYSTEM**

ZUGSTEUERUNGSSYSTEM

SYSTÈME DE COMMANDE DE TRAIN

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **09.08.2016 KR 20160101087**

(43) Date of publication of application:
**19.06.2019 Bulletin 2019/25**

(73) Proprietor: **Unionplace Co., Ltd.**
**Seoul 08380 (KR)**

(72) Inventors:
• **JUN, Jonguk**
**Guro-gu, Seoul 08380 (KR)**

• **BANG, Seongcheol**
**Guro-Gu, Seoul 08380 (KR)**

(74) Representative: **Maikowski & Ninnemann**
**Patentanwälte Partnerschaft mbB**
**Postfach 15 09 20**
**10671 Berlin (DE)**

(56) References cited:
JP-A- 2009 132 244    JP-A- 2013 184 516
JP-A- H06 183 346    JP-A- H06 183 346
KR-A- 20150 051 266    KR-B1- 101 458 043
US-A1- 2012 325 979    US-A1- 2016 129 924

## Description

### [Technical Field]

The present disclosure relates to a train control system.

### [Background Art]

The European train control system (ETCS) is a standard system that unifies different train control systems in Europe. This was originally used as a European standard, but has been developed into a global standard.

For example, a train control system that relates to ETCS is disclosed in Korean Patent Application Publication No. 10-2016-0001852 (Patent Document 1) entitled "ETCS Based Automatic Train Operation Signaling System" filed on June 27, 2014 and published on January 7, 2016 by Hyundai Rotem Company. Another train control system is known from US 2012 325 979 A1.

Detecting a position of a train is one of the most important issues in a train control process. To this end, various techniques have been developed and used to detect the position of the train.

For example, according to Patent Document 1 or Korean Patent No. 10-1374350 (Patent Document 2), entitled "Train Position Detecting Apparatus" filed on December 4, 2012 and registered on March 7, 2014 by Korea Railroad Research Institute, there has been proposed a conventional train control system using a technique for detecting the position of the train.

Specifically, Patent Document 1 or Patent Document 2 discloses a configuration in which a vehicle on-board controller equipped in a train detects a position of a train through, e.g., an axle-mounted tachometer, a configuration in which a position of a train is detected through a global positioning system (GPS) receiver equipped in the train, and a configuration in which a position of a train is detected by reading radio frequency identification (RFID) tags installed along a train line.

Meanwhile, railway casualty accidents may occur when a train enters and passes a train line during maintenance operations on the train line or in a state where a passenger has fallen on the train line.

In this regard, according to Korean Patent No. 10-0998339 (Patent Document 3) entitled "Train Line Monitoring System" filed on June 30, 2009 and registered on November 29, 2010 by ARTech Co., Ltd., there has been proposed a configuration in which railway safety-related accidents are prevented by scanning an area of a target train line.

However, the above described conventional techniques have the following problems.

First, the configuration for detecting the position of the train and the configuration for preventing the safety-related accidents are implemented in a completely different manner from each other. Thus, it is required to install the above configurations independently of each other.

Therefore, there arises, e.g., a cost increase problem since it is required to separately provide the configuration, disclosed in Patent Document 1 or Patent Document 2, for detecting the position of the train and the configuration, disclosed in Patent Document 3, for preventing the safety-related accidents.

Next, the configuration disclosed in Patent Document 1 or Patent Document 2 has a further problem that the maintenance cost becomes high and the reliability of the position detection is not guaranteed.

For example, in the configuration for detecting the position of the train using a GPS signal disclosed in Patent Document 1, it is difficult to accurately detect the position of the train in a place such as a tunnel where the reception state of the GPS signal is poor. Further, in the configuration for detecting the position of the train using the tachometer, it is also difficult to accurately detect the position of the train due to maintenance failure or malfunction of the tachometer. Moreover, the tachometers or the receivers for receiving GPS signals are equipped in each of a large number of trains running on the train line to detect a position of each of the trains. In order to more reliably detect the position of each of the trains when using the GPS signals or the tachometers, it is necessary to periodically check the failure or the malfunction of the tachometers or the receivers for receiving the GPS signal equipped in each of the trains. Therefore, there also arises a significant cost increase for maintenance.

Further, for example, in the configurations disclosed in Patent Document 1 and Patent Document 2, the position of the train is detected by detecting the RFID tags. Therefore, if there are defective tags among a large number of RFID tags installed along the train line, the position of the train cannot be detected at the places where the defective tags are disposed. This requires maintenance operations for the large number of RFID tags installed along the train line. In addition, it is also necessary to periodically check the failure or the malfunction of antennas in each of the trains running on the train line. Therefore, there also arises a significant cost increase for maintenance in the configuration for detecting the position of the train using the RFID tags.

(Patent Documents)

### [0015]

Patent Document 1: Korean Patent Application Publication No. 10-2016-0001852
Patent Document 2: Korean Patent No. 10-1374350
Patent Document 3: Korean Patent No. 10-0998339

### [Disclosure]

### [Technical Problem]

In view of the above, an object of the present disclosure is to provide a train control system capable of efficiently and accurately detecting a position of a train by using a plurality of unattended ground sensors while minimizing a cost required for maintenance.

Further, another object of the present disclosure is to provide the train control system capable of detecting an obstacle or the presence of a human being around a train line by using the plurality of unattended ground sensors installed to detect the position of the train, thereby preventing railway casualty accidents.

**[Technical Solution]**

The subject-matter of the claims is presented. In order to achieve the above object, in accordance with the present invention, there is provided a train control system including: a plurality of unattended ground sensors installed along a train line; and a control device configured to perform a third control mode for performing one mode selected, according to a predetermined criterion, from a first operation mode and a second operation mode, wherein in the first operation mode, a first control mode for detecting a position of a train based on data transmitted from the unattended ground sensors when the train travels on the train line is performed together with a second control mode for detecting safety information around the train line based on the data transmitted from the unattended ground sensors when vibrations around the train line is detected, and in the second operation mode, one of the first control mode and the second control mode is performed.

In the train control system according to the present invention, the control device may detect a current position of the train based on time (T1) at which a seismic wave generated by the train arrives at a first unattended ground sensor of the unattended ground sensors, time (T2) at which the seismic wave arrives at a second unattended ground sensor of the unattended ground sensors, a propagation velocity (v) of the seismic wave and a distance (D) between the first unattended ground sensor and the second unattended ground sensor.

Further, in the train control system according to the present invention, one or more of the unattended ground sensors may be connected to the train line through sensing lines, respectively.

Further, in the train control system according to the present invention, a distance between two adjacent unattended ground sensors of the unattended ground sensors installed along the train line may be set to be equal to or greater than 1/10 but equal to or less than 1/2 of a maximum sensing distance of each of the unattended ground sensors.

Further, in the train control system according to the present invention, the control device may be further configured to perform a fourth control mode for dynamically selecting the first unattended ground sensor and the second unattended ground sensor based on an operating state of each of the unattended ground sensors.

Further, in the train control system according to the present invention, the control device may be further configured to perform a fifth control mode for detecting a maintenance-required unattended ground sensor among the unattended ground sensors based on an operating state of each of the unattended ground sensors.

Further, in the train control system according to the present invention, the unattended ground sensors may communicate with one another through an ad-hoc wireless network.

Further, in the train control system according to the present invention, the train control system may further include at least one gateway configured to enable communication between the unattended ground sensors and the control device.

**[Advantageous Effects]**

In accordance with the present invention, it is possible to provide the train control system capable of efficiently and accurately detecting the position of the train by using the plurality of unattended ground sensors while minimizing the cost required for maintenance.

Further, it is also possible to provide the train control system capable of detecting an obstacle or the presence of a human being around a train line by using the plurality of unattended ground sensors installed to detect the position of the train, thereby preventing railway casualty accidents.

**[Description of Drawings]**

FIG. 1 is a block diagram showing an exemplary configuration of a train control system according to the present invention.
FIG. 2 shows an example of an arrangement of a plurality of unattended ground sensors in the train control system according to the present invention.
FIG. 3 shows an example in which a control device detects a position of a train based on data transmitted from the plurality of unattended ground sensors in the train control system according to the present invention.
FIG. 4 shows examples of control modes that can be performed by the control device of the train control system according to the present invention.

**[Best Mode]**

Hereinafter, a train control system in accordance with the present invention will be described in detail with reference to the accompanying drawings.

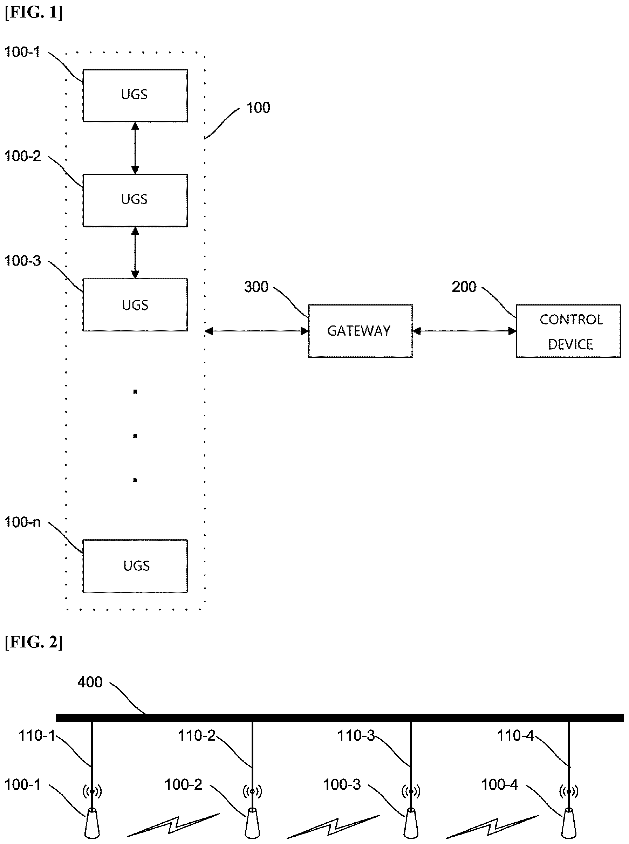

FIG. 1 is a block diagram showing an exemplary configuration of a train control system according to the present invention.
Referring to FIG. 1, the train control system includes a plurality of unattended ground sensors 100 and a control device 200, and may further include a gateway 300. However, it should be noted that the configurations of the train control system are not limited thereto, and the train control system may further include various configurations for the train control in addition to the unattended ground sensors 100, the control device 200 and the gateway 300.

In this embodiment, two or more unattended ground sensors 100 are provided. For example, an unattended ground sensor 100-1, an unattended ground sensor 100-2, and an unattended ground sensor 100-3 up to an unattended ground sensor 100-n (where 'n' is a natural number of 4 or more) are provided.

It is preferable that all of the unattended ground sensor 100-1, the unattended ground sensor 100-2 and the unattended ground sensor 100-3 up to the unattended ground sensor 100-n have the same configuration. However, it may be possible for some of the unattended ground sensors 100 to have a configuration different from that of the other unattended ground sensors 100.

Each of the unattended ground sensors 100 is a sensor for detecting vibrations, e.g., seismic waves caused by an earthquake or the like. Each of the unattended ground sensors 100 is configured to detect the seismic waves and transmit the detected data to the control device 200 through a wired or wireless communication network. Specifically, each of the unattended ground sensors 100 may transmit data directly to the control device 200, or some of the unattended ground sensors 100 may collect data from other unattended ground sensors 100 and transmit the collected data to the control device 200. Alternatively, each of the unattended ground sensors 100 may transmit data to the control device 200 through the gateway 300, which will be described later.

FIG. 2 shows an example of an arrangement of the unattended ground sensors 100 in the train control system according to the present invention.

Referring to FIG. 2, four of the unattended ground sensors 100, i.e., the unattended ground sensor 100-1, the unattended ground sensor 100-2, the unattended ground sensor 100-3 and the unattended ground sensor 100-4 are shown for the sake of explanation. However, the number of the unattended ground sensors 100 is not limited thereto.

The unattended ground sensor 100-1, the unattended ground sensor 100-2, the unattended ground sensor 100-3 and the unattended ground sensor 100-4 are respectively installed along a train line 400. The unattended ground sensor 100-1, the unattended ground sensor 100-2, the unattended ground sensor 100-3 and the unattended ground sensor 100-4 may be installed to be spaced apart from the train line 400 by predetermined intervals.

Further, the unattended ground sensor 100-1, the unattended ground sensor 100-2, the unattended ground sensor 100-3 and the unattended ground sensor 100-4 may be connected to the train line 400 through sensing lines 110-1 to 110-4, respectively. In order to receive operating power and/or more accurately detect seismic waves by receiving the seismic waves transmitted through the train line 400 that is a constant medium, the unattended ground sensor 100-1, the unattended ground sensor 100-2, the unattended ground sensor 100-3 and the unattended ground sensor 100-4 may be connected to the train line 400 through the sensing lines 110-1 to 110-4, respectively.

A positional distance between two adjacent unattended ground sensors, e.g., the unattended ground sensor 100-1 and the unattended ground sensor 100-2 among the plurality of unattended ground sensors 100 is determined based on the maximum sensing distance of each of the unattended ground sensors 100. The positional distance may be determined to be equal to or greater than 1/10 but equal to or less than 1/2 of the maximum sensing distance of each of the unattended ground sensor 100-1 and the unattended ground sensor 100-2.

For example, if the unattended ground sensors 100 are identical to each other and the maximum sensing distance of each of the unattended ground sensors 100 is 400 m (meters), then the positional distance between the unattended ground sensor 100-1 and the unattended ground sensor 100-2 is equal to or greater than 40 m but equal to or less than 200 m.

The maximum sensing distance of each of the unattended ground sensors 100 is determined based on the case where the seismic waves generated from a large-size object such as a train are to be detected.

In the case where two unattended ground sensors are disposed within the maximum sensing distance, even when an operation failure or an error is detected in one of the two unattended ground sensors, the seismic waves can be normally detected by using the other one of the two unattended ground sensors. In the conventional case where a position of a train is detected by using RFID tags, when an error has occurred in one of the RFID tags, the position of the train cannot be detected at a position where the RFID tag having the error is installed. However, according to the present invention, even when errors are detected in some of the unattended ground sensors, the position of the train can be normally detected by using other unattended ground sensors.

Meanwhile, when a movement of a human being, instead of the large-size object such as the train, is to be detected by using the unattended ground sensors 100, a sensing distance of each of the unattended ground sensors 100 can be reduced. Each of the unattended ground sensors 100 is configured to detect the movement of the human being, e.g., within a range of 100 m therearound. Therefore, in the train control system according to the present invention, when the control device 200 performs a second control mode to be described later, the positional distance between the unattended ground sensor 100-1 and the unattended ground sensor 100-2 is set to be further reduced. In this case, the positional distance between the unattended ground sensor 100-1 and the unattended ground sensor 100-2 may be set to 50 m or more, and more preferably set to 40 m or more considering the difference in weight of a human being.

Therefore, it is preferable that the positional distance between the two adjacent unattended ground sensors 100-1 and 100-2 among the unattended ground sensors 100 is set to be equal to or greater than 1/10 but equal to or less than 1/2 of the maximum sensing distance of each of the unattended ground sensor 100-1 and the unattended ground sensor 100-2.

Further, referring to FIG. 2, the unattended ground sensor 100-1, the unattended ground sensor 100-2, the unattended ground sensor 100-3 and the unattended ground sensor 100-4 may communicate with one another through an ad-hoc wireless network. In other words, the unattended ground sensors 100 can be more efficiently and flexibly installed by allowing the unattended ground sensors 100 to communicate with one another through the ad-hoc wireless network without the aid of an access point (AP).

The control device 200 is configured to at least perform a first control mode for detecting a position of the train based on the data transmitted from the unattended ground sensors.

The control device 200 will be described in detail later.

The gateway 300 is configured to enable communication between the unattended ground sensors 100 and the control device 200. For example, the gateway 300 receives data transmitted directly from each of the unattended ground sensors 100 or data transmitted from one or more of the unattended ground sensors 100 serving to collect data of other unattended ground sensors 100. Then, the gateway 300 transmits the received data to the control device 200.

Further, a plurality of the gateways 300 may be disposed. That is, the gateways 300 are disposed at different distances, and each of the gateways 300 preferably enables communication between the control device 200 and those of the unattended ground sensors 100 which are arranged within an area where the corresponding gateway is disposed.

As described above, the control device 200 is configured to at least perform the first control mode for detecting the position of the train based on the data transmitted from the unattended ground sensors 100.

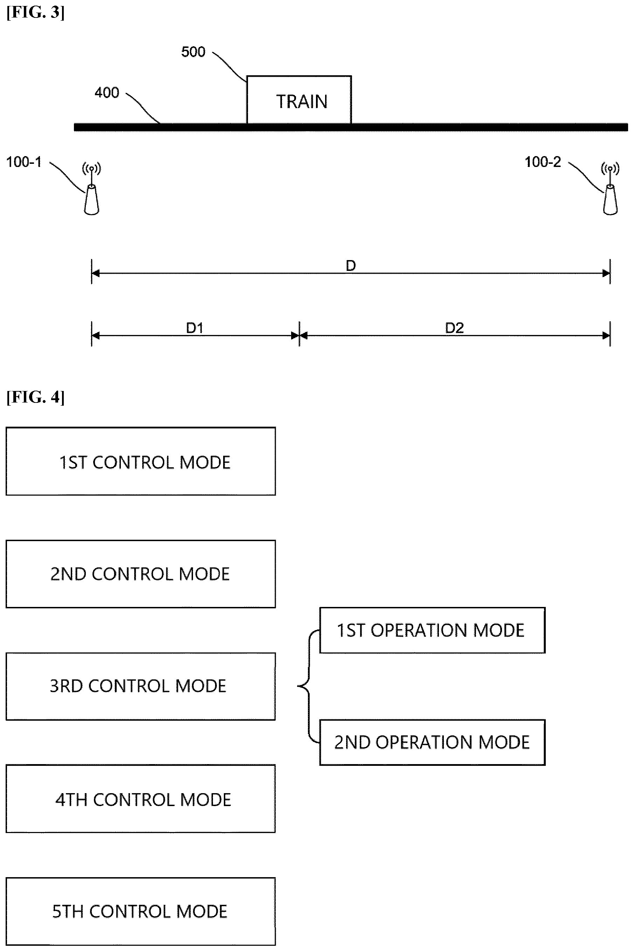

FIG. 3 shows an example in which the control device detects the position of the train based on the data transmitted from the unattended ground sensors in the train control system according to the present invention.

Referring to FIG. 3, there is shown a configuration in which the position of the train is detected in real time by a first unattended ground sensor and a second unattended ground sensor while the train 500 is traveling on the train line 400.

Here, the first unattended ground sensor and the second unattended ground sensor are designated among the unattended ground sensors 100, and may be, e.g., the unattended ground sensor 100-1 and the unattended ground sensor 100-2 adjacent to each other or the unattended ground sensor 100-1 and the unattended ground sensor 100-3 that are not adjacent to each other.

In the following description, unless otherwise specified, it is assumed that the first unattended ground sensor is the unattended ground sensor 100-1 and the second unattended ground sensor is the unattended ground sensor 100-2.

The control device 200 is configured to perform the first control mode in which the position of the train is detected.

More specifically, a seismic wave is generated when the train 500 travels on the train line 400. The seismic wave is transmitted to each of the unattended ground sensors 100, i.e., each of the unattended ground sensor 100-1 and the unattended ground sensor 100-2 through the ground surface.

A distance D between the unattended ground sensor 100-1 and the unattended ground sensor 100-2 is inputted in advance. Further, a propagation velocity v of the seismic wave is also inputted in advance. Since the propagation velocity v of the seismic wave may vary depending on the state of the medium between the unattended ground sensor 100-1 and the unattended ground sensor 100-2, it is preferable that the propagation velocity v is inputted in advance by obtaining it through the measurement.

The control device 200 receives data from each of the unattended ground sensor 100-1 and the unattended ground sensor 100-2 and, based on the received data, calculates time T1 at which the seismic wave generated by the train 500 arrives at the unattended ground sensor 100-1 and time T2 at which the seismic wave generated by the train 500 arrives at the unattended ground sensor 100-2.

As shown in FIG. 3, when a distance between the train 500 and the unattended ground sensor 100-1 is denoted by D1; a distance between the train 500 and the unattended ground sensor 100-2 is denoted by D2; and a difference between the time T2 at which the seismic wave arrives at the unattended ground sensor 100-2 and the time T1 at which the seismic wave arrives at the unattended ground sensor 100-1, i.e., T2-T1, is denoted by Td, the following relationship is derived between the above parameters:

$$T1 = D1/v$$

$$T2 = D2/v$$

$$D = D1+D2$$

$$Td = T2\text{-}T1 = (D2\text{-}D1)/v = (D\text{-}2D1)/v$$

$$D1 = (D\text{-}vTd)/2.$$

Therefore, the distance D1 between the train 500 and the unattended ground sensor 100-1 can be calculated on the basis of the distance D between the unattended ground sensor 100-1 and the unattended ground sensor 100-2; the propagation velocity v of the seismic wave; and the difference between the time T2 at which the seismic wave arrives at the unattended ground sensor 100-2 and the time T1 at which the seismic wave arrives at the unattended ground sensor 100-1.

Meanwhile, as described above, the unattended ground sensors 100-1 and 100-2 may be connected to the train line 400 through the sensing lines 110-1 and 110-2, respectively. In this case, the propagation velocity v of the seismic wave can be inputted in advance by obtaining it through the measurement using train line 400 as the medium. In the case when the unattended ground sensors 100-1 and 100-2 are connected to the train line 400 through the sensing lines 110-1 and 110-2, respectively, the distance D1 between the train 500 and the unattended ground sensor 100-1 can also be calculated on the basis of the distance D between the unattended ground sensor 100-1 and the unattended ground sensor 100-2; the propagation velocity v of the seismic wave; and the difference between the time T2 at which the seismic wave arrives at the unattended ground sensor 100-2 and the time T1 at which the seismic wave arrives at the unattended ground sensor 100-1.

**[Mode for Invention]**

The control device 200 of the train control system according to the present invention may be configured to further perform other control modes as well as the first control mode for detecting the position of the train.

FIG. 4 shows examples of control modes that can be performed by the control device of the train control system according to the present invention.

Referring to FIG. 4, the control device 200 may be configured to perform the second control mode, a third control mode, a fourth control mode, and a fifth control mode in addition to the first control mode. The third control mode includes a first operation mode and a second operation mode.

More specifically, the control device 200 may be configured to perform the second control mode in which safety information around the train line 400 is detected based on data transmitted from the unattended ground sensors 100.

For example, the risk of railway casualty accidents is high when an operator performs railway maintenance operation on the train line 400 or a person moves around the train line 400.

Therefore, the control device 200 detects vibrations around the train line 400 based on the data transmitted from the unattended ground sensors 100, and then detects the safety information based on the detected results. For example, in Fig. 3, when the control device 200 receives data from each of the unattended ground sensor 100-1 and the unattended ground sensor 100-2, the position where the vibration has occurred can be detected as described with reference to Fig. 3. Therefore, it is possible to easily detect a specific position around the train line 400 where the safety-related problem has currently occurred.

The second control mode may be used to monitor the presence of an intruder around the train line 400. For example, after the train operation is stopped, the control device 200 performs the second control mode to detect the vibration in the vicinity of the train line 200. If the vibration is detected in the vicinity of the train line 200, there is a possibility that the safety-related problem has occurred. Therefore, the system manager is able to monitor the train line 200 based on the second control mode.

Conventionally, an additional monitoring system for monitoring an intruder is required to be provided. However, according to the present invention, there is no need to provide the additional monitoring system since such vibration can be detected through the second control mode.

The control device 200 is configured to perform the third control mode. The third control mode includes the first operation mode in which the first control mode and the second control mode are performed together and the second operation mode in which one of the first control mode and the second control mode is performed, and the control device 200 performs the third control mode by selecting one of the first operation mode and the second operation mode according to a predetermined criterion.

In the first operation mode, the second control mode is performed together with the first control mode even while the train 500 is in operation. In this case, while the position of the train 500 is detected, the safety information can also be detected by detecting another vibration around the train line 400.

In the second operation mode, for example, one of the first control mode and the second control mode is selected based on whether or not the train 500 is in operation, so that the first control mode is performed during which the train 500 is in operation and the second control mode is performed during which the train 500 is not in operation.

Further, the control device 200 may be configured to perform the fourth control mode for dynamically selecting the first unattended ground sensor and the second unattended ground sensor based on the operating state of each of the unattended ground sensors 100. Referring back to FIG. 2, four of the unattended ground sensors 100, i.e., the unattended ground sensor 100-1, the unattended ground sensor 100-2, the unattended ground sensor 100-3 and the unattended ground sensor 100-4 are provided. Further, for example, the position of the train 200 may be detected by using the unattended ground sensor 100-1 as the first unattended ground sensor and the unattended ground sensor 100-2 as the second unattended ground sensor, respectively, as shown in FIG. 3. However, due to, e.g., the failure of the unattended ground sensor 100-2 or the circumstance around the unattended ground sensor 100-2, the control device 100 may not normally receive data from the unattended ground sensor 100-2.

Therefore, even when operation failures occur in some of the unattended ground sensors 100, the control device 200 may detect the position of the train 500 by using other unattended ground sensors that are in normal operation.

Further, the control device 200 may be configured to perform the fifth control mode for detecting a maintenance-required unattended ground sensor among the unattended ground sensors 100 based on the operating state of each of the unattended ground sensors 100.

As previously described, the control device 200 receives data directly from each of the unattended ground sensors 100 or from some of the unattended ground sensors that collect the data from other unattended ground sensors 100, or the control device 200 receives data through the gateway 300.

Therefore, the control device 200 may detect unattended ground sensors that are unable to generate data among the unattended ground sensors 100 and set such unattended ground sensor as the maintenance-required unattended ground sensors. The system manager may perform the maintenance operation for the detected unattended ground sensors through the fifth control mode.

Although various embodiments of the present disclosure have been described in detail, the above descriptions merely illustrate the technical idea of the present disclosure.

Therefore, the exemplary embodiments disclosed herein are not used to limit the technical idea of the present disclosure, but to explain the present disclosure, and the scope of the technical idea of the present disclosure is not limited by those embodiments. The scope of protection of the present invention is defined by the features of the following claims.

**[Industrial Applicability]**

In accordance with one embodiment of the present disclosure, it is possible to provide a train control system capable of efficiently and accurately detecting a position of a train by using a plurality of unattended ground sensors while minimizing a cost required for maintenance.

Further, it is also possible to provide the train control system capable of detecting an obstacle or the presence of a human being around a train line by using the plurality of unattended ground sensors installed to detect the position of the train, thereby preventing railway casualty accidents.

(Explanation of Reference Symbols)

100: unattended ground sensors
100-1 to 100-n: unattended ground sensors
110-1 to 110-4: sensing lines
200: control device
300: gateway
400: train line
500: train

**Claims**

1.　A train control system comprising:

a plurality of unattended ground sensors (100) installed along a train line (400); and
a control device (200) configured to perform a third control mode for performing one operation mode selected, according to a predetermined criterion, from a first operation mode and a second operation mode,
wherein, in the first operation mode, a first control mode for detecting a position of a train (500) based on data transmitted from the unattended ground sensors (100) when the train (500) travels on the train line (400) is performed together with a second control mode for detecting safety information around the train line (400) based on the data transmitted from the unattended ground sensors (100) when vibrations around the train line (400) is detected, and in the second operation mode, either the first control mode or the second control mode is performed.

2.　The train control system of claim 1, wherein the control device (200) detects a current position of the train (500) based on time, T1, at which a seismic wave generated by the train (500) arrives at a first unattended ground sensor (100-1) of the unattended ground sensors (100), time, T2, at which the seismic wave arrives at a second unattended ground sensor (100-2) of the unattended ground sensors (100), a propagation velocity, v, of the seismic wave and a distance, D, between the first unattended ground sensor (100-1) and the second unattended ground sensor (100-2).

3.　The train control system of claim 1, wherein one or more of the unattended ground sensors (100) are connected to the train line (400) through sensing lines (110-1 - 110-4), respectively.

4. The train control system of claim 1, wherein a distance between two adjacent unattended ground sensors (100-1, 100-2) of the unattended ground sensors (100) installed along the train line (400) is set to be equal to or greater than 1/10 but equal to or less than 1/2 of a maximum sensing distance of each of the unattended ground sensors.

5. The train control system of claim 2, wherein the control device (200) is further configured to perform a fourth control mode for dynamically selecting the first unattended ground sensor (100-1) and the second unattended ground sensor (100-2) based on an operating state of each of the unattended ground sensors (100).

6. The train control system of claim 1, wherein the control device (200) is further configured to perform a fifth control mode for detecting a maintenance-required unattended ground sensor (100-1) among the unattended ground sensors (100) based on an operating state of each of the unattended ground sensors (100).

7. The train control system of claim 1, wherein the unattended ground sensors (100) communicate with one another through an ad-hoc wireless network.

8. The train control system of claim 1, wherein the train control system further comprises at least one gateway (300) configured to enable communication between the unattended ground sensors (100) and the control device (200).


**Patentansprüche**

1. Zugsteuersystem, das Folgendes umfasst:

eine Vielzahl von unbeaufsichtigten Bodensensoren (100), die entlang einer Zugstrecke (400) installiert sind; und eine Steuervorrichtung (200), die dazu ausgelegt ist, zum Durchführen von einem gemäß einem vorbestimmten Kriterium aus einem ersten Betriebsmodus und einem zweiten Betriebsmodus ausgewählten Betriebsmodus einen dritten Steuermodus durchzuführen,
wobei im ersten Betriebsmodus zum Detektieren einer Position eines Zugs (500) auf Basis von Daten, die von den unbeaufsichtigten Bodensensoren (100) übertragen werden, wenn der Zug (500) auf der Zugstrecke (400) fährt, ein erster Steuermodus zusammen mit einem zweiten Steuermodus zum Detektieren von Sicherheitsinformationen um die Zugstrecke (400) auf Basis der Daten, die von den unbeaufsichtigten Bodensensoren (100) übertragen werden, wenn Vibrationen um die Zugstrecke (400) detektiert werden, durchgeführt wird und im zweiten Betriebsmodus entweder der erste Steuermodus oder der zweite Steuermodus durchgeführt wird.

2. Zugsteuersystem nach Anspruch 1, wobei die Steuervorrichtung (200) eine aktuelle Position des Zugs (500) auf Basis einer Zeit, T1, zu der eine seismische Welle, die vom Zug (500) erzeugt wird, an einem ersten unbeaufsichtigten Bodensensor (100-1) der unbeaufsichtigten Bodensensoren (100) ankommt, einer Zeit, T2, zu der die seismische Welle an einem zweiten unbeaufsichtigten Bodensensor (100-2) der unbeaufsichtigten Bodensensoren (100) ankommt, einer Ausbreitungsgeschwindigkeit, v, der seismischen Welle und einem Abstand, D, zwischen dem ersten unbeaufsichtigten Bodensensor (100-1) und dem zweiten unbeaufsichtigten Bodensensor (100-2) detektiert.

3. Zugsteuersystem nach Anspruch 1, wobei ein oder mehrere der unbeaufsichtigten Bodensensoren (100) über Erfassungsleitungen (110-1-110-4) mit der Zugstrecke (400) verbunden sind.

4. Zugsteuersystem nach Anspruch 1, wobei ein Abstand zwischen zwei benachbarten unbeaufsichtigten Bodensensoren (100-1, 100-2) der unbeaufsichtigten Bodensensoren (100), die entlang der Zugstrecke (400) installiert sind, derart eingestellt ist, dass er gleich oder größer als 1/10, aber gleich oder kleiner als 1/2 eines maximalen Erfassungsabstandes von jedem der unbeaufsichtigten Bodensensoren ist.

5. Zugsteuersystem nach Anspruch 2, wobei die Steuervorrichtung (200) ferner dazu ausgelegt ist, zum dynamischen Auswählen des ersten unbeaufsichtigten Bodensensors (100-1) und des zweiten unbeaufsichtigten Bodensensors (100-2) auf Basis eines Betriebszustands von jedem der unbeaufsichtigten Bodensensoren (100) einen vierten Steuermodus durchzuführen.

6. Zugsteuersystem nach Anspruch 1, wobei die Steuervorrichtung (200) ferner dazu ausgelegt ist, zum Detektieren eines Wartungsbedarfs eines unbeaufsichtigten Bodensensors (100-1) unter den unbeaufsichtigten Bodensensoren (100) auf Basis eines Betriebszustands von jedem der unbeaufsichtigten Bodensensoren (100) einen fünften Steuermodus durchzuführen.

7. Zugsteuersystem nach Anspruch 1, wobei die unbeaufsichtigten Bodensensoren (100) über ein drahtloses Ad-hoc-Netzwerk miteinander kommunizieren.

**8.** Zugsteuersystem nach Anspruch 1, wobei das Zugsteuersystem ferner mindestens ein Gateway (300) umfasst, das dazu ausgelegt ist, eine Kommunikation zwischen den unbeaufsichtigten Bodensensoren (100) und der Steuervorrichtung (200) zu ermöglichen.

**Revendications**

**1.** Système de commande de train comprenant :

une pluralité de capteurs au sol autonomes (100) installés le long d'une ligne de train (400) ; et

un dispositif de commande (200) configuré pour mettre en oeuvre un troisième mode de commande pour mettre en oeuvre un mode de fonctionnement sélectionné, en fonction d'un critère prédéterminé, à partir d'un premier mode de fonctionnement et d'un second mode de fonctionnement,

dans lequel, dans le premier mode de fonctionnement, un premier mode de commande pour détecter une position d'un train (500) sur la base de données transmises à partir des capteurs au sol autonomes (100) lorsque le train (500) se déplace sur la ligne de train (400) est mis en oeuvre avec un second mode de commande pour détecter des informations de sécurité autour de la ligne de train (400) sur la base des données transmises à partir des capteurs au sol autonomes (100) lorsque des vibrations autour de la ligne de train (400) sont détectées, et dans le second mode de fonctionnement, soit le premier mode de commande, soit le second mode de commande est mis en oeuvre.

**2.** Système de commande de train selon la revendication 1, dans lequel le dispositif de commande (200) détecte une position actuelle du train (500) sur la base d'un instant, T1, auquel une onde sismique générée par le train (500) arrive au niveau d'un premier capteur au sol autonome (100-1) des capteurs au sol autonomes (100), d'un instant, T2, auquel l'onde sismique arrive au niveau d'un second capteur au sol autonome (100-2) des capteurs au sol autonomes (100), d'une vitesse de propagation, v, de l'onde sismique et d'une distance, D, entre le premier capteur au sol autonome (100-1) et le second capteur au sol autonome (100-2).

**3.** Système de commande de train selon la revendication 1, dans lequel un ou plusieurs des capteurs au sol autonomes (100) sont connectés à la ligne de train (400) par l'intermédiaire de lignes de détection (110-1 - 110-4), respectivement.

**4.** Système de commande de train selon la revendication 1, dans lequel une distance entre deux capteurs au sol autonomes (100-1, 100-2) adjacents des capteurs au sol autonomes (100) installés le long de la ligne de train (400) est réglée pour être égale ou supérieure à 1/10, mais égale ou inférieure à 1/2 d'une distance de détection maximale de chacun des capteurs au sol autonomes.

**5.** Système de commande de train selon la revendication 2, dans lequel le dispositif de commande (200) est en outre configuré pour mettre en œuvre un quatrième mode de commande pour sélectionner dynamiquement le premier capteur au sol autonome (100-1) et le second capteur au sol autonome (100-2) sur la base d'un état de fonctionnement de chacun des capteurs au sol autonomes (100).

**6.** Système de commande de train selon la revendication 1, dans lequel le dispositif de commande (200) est en outre configuré pour mettre en œuvre un cinquième mode de commande pour détecter un capteur au sol autonome (100-1) nécessitant une maintenance parmi les capteurs au sol autonomes (100) sur la base d'un état de fonctionnement de chacun des capteurs au sol autonomes (100).

**7.** Système de commande de train selon la revendication 1, dans lequel les capteurs au sol autonomes (100) communiquent les uns avec les autres par l'intermédiaire d'un réseau sans fil ad hoc.

**8.** Système de commande de train selon la revendication 1, dans lequel le système de commande de train comprend en outre au moins une passerelle (300) configurée pour permettre une communication entre les capteurs au sol autonomes (100) et le dispositif de commande (200).

[FIG. 1]

[FIG. 2]

[FIG. 3]

[FIG. 4]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020160001852
- US 2012325979 A1
- KR 101374350
- KR 100998339